# EUROPEAN PATENT SPECIFICATION

(11) **EP 3 112 213 B1**
(45) Date of publication and mention of the grant of the patent: **09.08.2023**
(21) Application number: 16171673.3
(22) Date of filing: 27.05.2016
(51) Int. Cl.: B60Q 1/00, B62J 6/02, F21S 41/148, F21S 41/19, F21S 41/255, F21S 41/29, F21S 41/30, F21S 41/33, F21S 41/39, F21S 41/50, F21S 45/47

(54) **HEADLIGHT**
SCHEINWERFER
PHARE

(30) Priority: 03.07.2015 JP 2015134515
(43) Date of publication of application: 04.01.2017
(73) Proprietor: Yamaha Hatsudoki Kabushiki Kaisha, Iwata-shi, Shizuoka 438-8501 (JP)
(72) Inventor: SAETIA, Rungtawan, 10540 Samutprakarn (TH); PHANSUA, Jaruwat, 10540 Samutprakarn (TH)
(74) Representative: Grünecker Patent- und Rechtsanwälte PartG mbB

(56) References cited:
- WO-A1-2015/016068
- DE-A1-102010 012 137
- DE-A1-102013 205 317
- DE-A1-102015 109 226
- JP-A- 2013 030 372
- JP-A- 2014 093 286
- JP-A- 2014 235 878
- TW-U- M 496 724
- US-A1- 2007 177 401
- US-A1- 2010 246 205
- US-A1- 2012 281 424

## Description

### BACKGROUND OF THE INVENTION

A variety of designs of headlights have been proposed so far. For example, a headlight (36) described in Japan Laid-open Patent Application Publication No. 2013-112272 includes a projector lamp unit (42) forwardly protruding from a support member (45). The projector lamp unit (42) is disposed in the vehicle width directional center of the headlight (36). The projector lamp unit (42) is disposed on the bottom portion of the support member (45).

On the other hand, in recent years, headlight units with LEDs have begun to be used for power saving. For example, Japan Laid-open Patent Application Publication No. 2013-178904 describes a construction that an LED chip (114a) is used as a high beam light emitting diode and another LED chip (114b) is used as a low beam light emitting diode. The high beam LED chip (114a) is disposed on the lower surface of an LED board (112) extending in the right-and-left direction. The low beam LED chip (114b) is disposed on the upper surface of the LED board (112) extending in the right-and-left direction. The high beam LED chip (114a) is disposed under the low beam LED chip (114b). TW M 496 724 U discloses a headlight according to the preamble of independent claim 1.

### SUMMARY OF THE INVENTION

To meet design requirements, there are chances of considering a construction to be obtained by disposing the protruding portion of the projector lamp unit (42) described in Japan Laid-open Patent Application Publication No. 2013-112272 in a position close to the vehicle width directional center and the up-and-down directional center. In this construction, however, the protruding portion protrudes from the support member in a cantilevered state, and thereby, insufficient support stiffness is concerned for the protruding portion. To cope with this, it can be assumed to enhance the support stiffness by increasing the cross-sectional area of the protruding portion without deteriorating luminous intensity distribution of a light from the protruding portion and that of a light from a reflector member.

Incidentally, when an LED chip is used as a light source in a headlight with a protruding portion as described above, it can be assumed to dispose an LED board to which the LED chip is mounted in the interior of the protruding portion. In this construction, the LED board is unlikely to be seen from outside, and thus, good aesthetic properties can be achieved. Additionally, efficiency in accommodating the LED board can be enhanced.

However, when the LED board is disposed in the interior of the protruding portion, dissipation of heat from the LED board is inevitably blocked by the protruding portion enclosing the LED board. To cope with this, it is effective to further increase the cross-sectional area of the protruding portion as a countermeasure against heat. However, this countermeasure results in reduction in distance between the reflector member and the LED light source disposed in the periphery of the protruding portion. Accordingly, luminous intensity distribution could be deteriorated as described above.

As an alternative construction, it can be assumed to forwardly elongate the protruding portion so as to reliably produce a large heat dissipation space. However, in this construction, the protruding portion is designed to protrude longer in a cantilevered state, and thereby, insufficient support stiffness for the protruding portion is again concerned. Additionally, a clear lens is located forward of the protruding portion. Hence, there is a limitation in elongating the protruding portion.

It is an object of the present invention to enable a headlight, in which an LED chip is used as a light source and which includes a protruding portion that forwardly protrudes from a rear wall portion while being located radially inward of a circumferential wall portion, to reliably achieve both of stiffness required for supporting the protruding portion and luminous intensity distribution required for the headlight, and simultaneously, to enhance efficiency in accommodating the LED board and efficiency in dissipation of heat from the LED board. This problem is solved with a headlight according to claim 1.

A headlight according to an aspect of the present invention includes an LED device, a housing, a reflector member and a clear cover. The LED device includes an LED chip and an LED board. The LED board is electrically connected to the LED chip. The housing includes an opening opened forward. The housing accommodates the LED device. The reflector member is accommodated in the housing and reflects a light irradiated from the LED chip. The clear cover is covering the opening of the housing and permits the light irradiated from the LED chip to forwardly pass therethrough. The reflector member includes a rear wall portion, a circumferential wall portion, a protruding portion and a rib portion.

The rear wall portion is at least partially disposed rearward of the LED chip. The circumferential wall portion forwardly extends from the rear wall portion and extends circumferentially about an axis extending in a back-and-forth direction. The protruding portion forwardly protrudes from the rear wall portion while being disposed radially inward of the circumferential wall portion. The rib portion extends in a radial direction of the circumferential wall portion and is connected to the protruding portion and the circumferential wall portion. The reflector member includes a board mount space in which the LED board is disposed. The board mount space includes a first space and a second space. The first space is produced inside the protruding portion. The second space is produced inside the rib portion and communicates with the

In the headlight according to the present aspect, even in constructing the protruding portion that forwardly protrudes from the rear wall portion while being disposed radially inward of the circumferential wall portion, the stiffness of supporting the protruding portion can be enhanced with the rib portion connected to the protruding portion and the circumferential wall portion.

Additionally, the board mount space is produced by connecting the first space of the protruding portion and the second space of the rib portion. Hence, it is possible to reliably produce a heat dissipation space with a larger volume than that produced when only the protruding portion is provided without the rib portion. Therefore, it is possible to reduce necessity to increase the cross-sectional area and the length of the protruding portion so as to increase the volume of the heat dissipation space.

On the other hand, the rib portion radially extends and is connected to the protruding portion and the circumferential wall portion, whereby the space surrounding the protruding portion is divided. Hence, a distance between the protruding portion and the circumferential wall portion can be reliably kept long in most of the space surrounding the protruding portion except for the rib portion. Therefore, it is easier to reliably obtain required luminous intensity distribution than a construction that the cross-sectional area of the protruding portion is uniformly enlarged in the radial direction so as to reliably produce a heat dissipation space.

Consequently, it is possible to reliably achieve stiffness required for supporting the protruding portion and luminous intensity distribution required for the headlight, and simultaneously, to enhance efficiency in dissipation of heat from the LED board.

The rib portion includes a left rib portion and a right rib portion. The left rib portion extends leftward from the protruding portion in a front view. The right rib portion extends rightward from the protruding portion in the front view. In the construction, the stiffness of supporting the protruding portion can be further enhanced by the left and right rib portions.

The rib portion and the protruding portion divides a space enclosed by the circumferential wall portion into an upper space and a lower space in the front view. In the construction, the luminous intensity distribution of a light from the upper space and/or that of a light from the lower space can be enhanced.

The LED chip may include a first LED chip and a second LED chip. The first LED chip may be configured to irradiate a light to the upper space. The second LED chip may be configured to irradiate a light to the lower space. In the construction, the luminous intensity distribution of the light irradiated from the first LED chip to the upper space and that of the light irradiated from the second LED chip to the lower space can be enhanced by the rib portion and the protruding portion.

The LED board may include a first board and a second board. The first board may be electrically connected to the first LED chip. The second board may be electrically connected to the second LED chip. In the construction, the LED board is divided into the first board and the second board. Therefore, flexibility in layout can be enhanced.

The protruding portion and/or the rib portion may include an upper opening for making the board mount space and the upper space communicate with each other. The first LED chip may be configured to irradiate the light to the upper space through the upper opening. In the construction, the light can be irradiated to the upper space through the upper opening, while the LED board is mounted to the board mount space. Additionally, a portion of the LED board is exposed through the upper opening. With the construction, local heat from this portion can be dissipated to the upper space through the upper opening. Accordingly, efficiency in dissipation of heat can be enhanced as a whole.

The protruding portion and/or the rib portion may include a lower opening for making the board mount space and the lower space communicate with each other. The second LED chip may be configured to irradiate the light to the lower space through the lower opening. In the construction, the light can be irradiated to the lower space through the lower opening, while the LED board is mounted to the board mount space. Additionally, a portion of the LED board is exposed through the lower opening. With the construction, local heat from this portion can be dissipated to the lower space through the lower opening. Accordingly, efficiency in dissipation of heat can be enhanced as a whole.

The first board and/or the second board may be disposed across the first space and the second space. In the construction, heat from the first board and/or heat from the second board can be dissipated to the first space and the second space. Accordingly, efficiency in dissipation of heat can be further enhanced. Additionally, flexibility in layout is enhanced, and thus, a large board can be accommodated.

In a thickness direction of the rib portion, the rib portion has a dimension smaller than a dimension of the protruding portion. In the construction, a space divided by the rib portion can be reliably produced with a larger size than that produced when the rib portion has a dimension greater than or equal to that of the protruding portion in the thickness direction of the rib portion. Put differently, a larger irradiation area can be reliably produced.

The LED chip may include a third LED chip disposed in the first space. In the construction, a light can be irradiated from the protruding portion.

The third LED chip may be attached to an upper surface of the second board. The second LED chip may be attached to a lower surface of the second board. In the construction, the second board can be used as a common board for the second and third LED chips by attaching the second and third LED chips to the lower and upper surfaces of the second board on a one-to-one basis.

The third LED chip may be attached to a lower surface of the first board. The first LED chip may be attached to an upper surface of the first board. In the construction, the first board can be used as a common board for the first and third LED chips by attaching the first and third LED chips to the upper and lower surfaces of the first board on a one-to-one basis.

The reflector member may further include a reflector portion. The reflector portion may be disposed in the first space and may forwardly reflect a light irradiated from the third LED chip. In the construction, flexibility in layout of the third LED chip can be enhanced.

The protruding portion may have a tubular shape. In the construction, the support stiffness can be further enhanced.

The headlight may further include an inner cover. The inner cover may be made of a material with translucency and may be attached to a tip of the protruding portion. In the construction, a forwardly irradiated light can be adjusted by the inner cover.

### BRIEF DESCRIPTION OF THE DRAWINGS

FIG 1 is a side view of a scooter type vehicle with a headlight according to a preferred embodiment of the invention.
FIG 2 is a front view of the scooter type vehicle.
FIG 3 is a perspective view of a headlight.
FIG. 4 is an exploded perspective view of the headlight.
FIG. 5 is a front view of a reflector member.
FIG. 6 is a perspective view of the reflector member seen from an obliquely upper rear side.
FIG. 7 is a perspective view of the reflector member seen from an obliquely lower rear side.
FIG. 8 is a cross-sectional view taken along line VIII-VIII in FIG. 5.
FIG. 9 is a cross-sectional view taken along line IX-IX in FIG. 5.
FIG. 10 is a cross-sectional view taken along line X-X in FIG. 5.
FIG. 11 is a perspective view of the reflector member from which a first board and a second board are detached.
FIG. 12 is a perspective view of the reflector member from which the first board and the second board are detached.
FIG. 13 is a rear view of a first reflector member.
FIG. 14 is a perspective view of the first reflector member seen from an upper front side.
FIG. 15 is a perspective view of the first reflector member seen from an obliquely lower rear side.
FIG. 16 is a perspective view of a second reflector member seen from an obliquely upper rear side.
FIG. 17 is a front view of the second reflector member.
FIG. 18 is a perspective view of the second reflector member seen from an obliquely upper front side.
FIG. 19 is a plan view of the second reflector member.

### DETAILED DESCRIPTION OF THE PREFERRED EMBODIMENTS

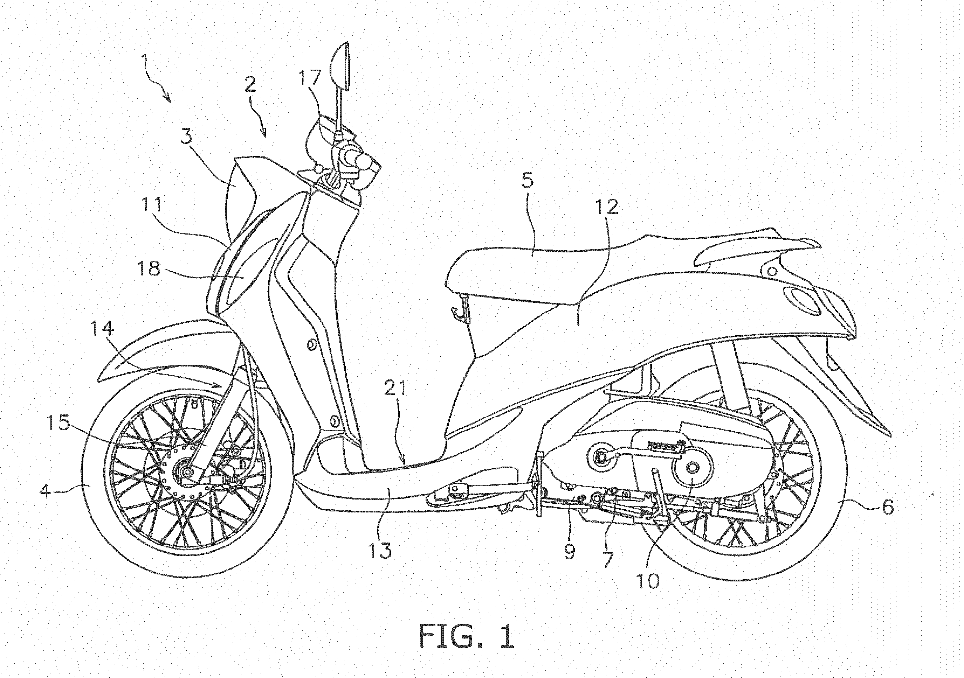

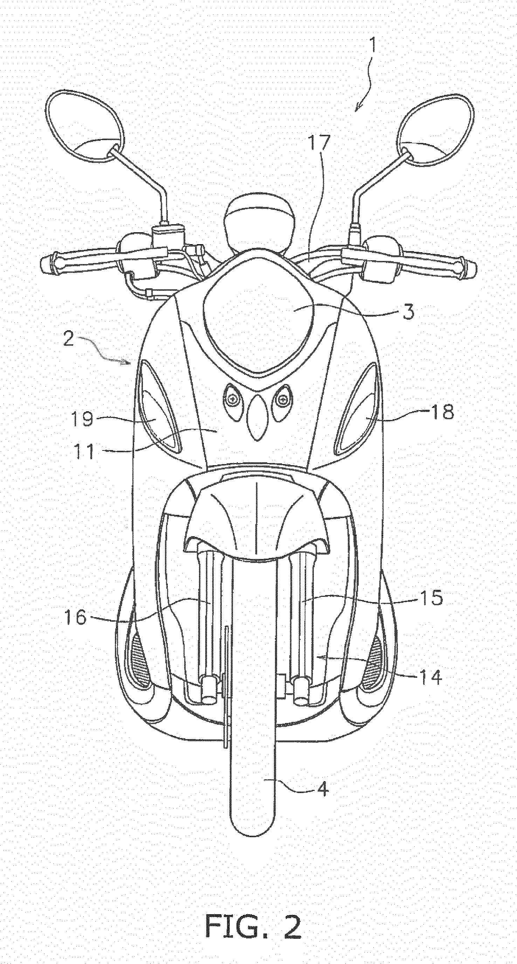

A scooter type vehicle 1 with a headlight 3 according to a preferred embodiment will be hereinafter explained with reference to the attached drawings. FIG. 1 is a side view of the scooter type vehicle 1. FIG 2 is a front view of the scooter type vehicle 1. The scooter type vehicle 1 includes a vehicle body cover 2, a headlight 3, a front wheel 4, a seat 5, a rear wheel 6 and a power unit 7.

It should be noted that in the present specification, a back-and-forth direction, an up-and-down direction and a right-and-left direction of the scooter type vehicle 1 respectively refer to those directions seen from a rider riding on the scooter type vehicle 1.

As shown in FIG. 1, the vehicle body cover 2 includes a front cover 11, a rear cover 12 and a lower cover 13. The front cover 11 is disposed in front of the seat 5. The front cover 11 covers a steering device 14. The steering device 14 is mounted to be rotatable right and left with respect to the front cover 11. As shown in FIG. 2, the steering device 14 includes a pair of left and right suspensions 15 and 16. A handle 17 is attached to the upper portion of the steering device 14. The front wheel 4 is rotatably supported by the lower portion of the steering device 14.

The headlight 3 is attached to the front cover 11. Left and right flashers 18 and 19 are attached to the front cover 11. The rear cover 12 is disposed under the seat 5. The rear cover 12 is disposed behind the front cover 11.

The lower cover 13 is disposed between the front cover 11 and the rear cover 12. The upper surface of the lower cover 13 includes a footboard 21. The footboard 21 is disposed forward of and lower than the seat 5. The footboard 21 is provided for enabling a rider to put his/her feet thereon. The footboard 21 has a flat shape. It should be noted that the footboard 21 may include a tunnel portion in the middle portion thereof, and the tunnel portion may upwardly protrude therefrom and may extend in the back-and-forth direction.

The power unit 7 is disposed under the seat 5. The power unit 7 includes an engine 9 and a transmission 10. The rear wheel 6 is rotatably supported by the power unit 7.

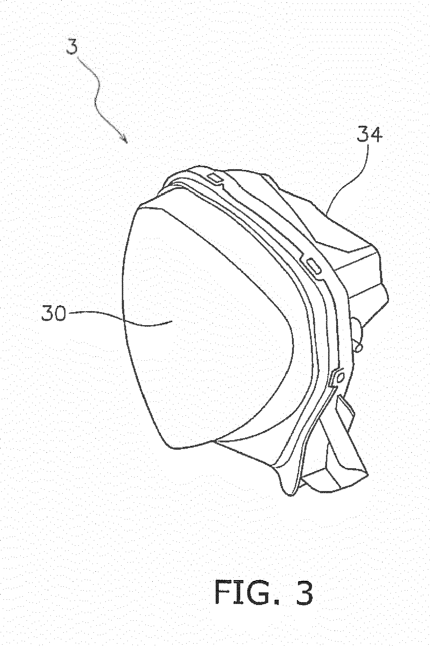

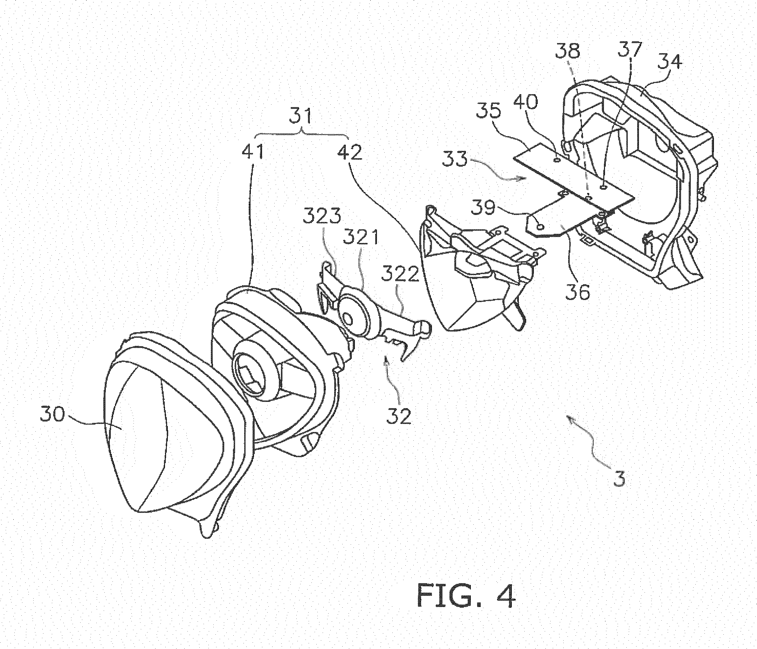

Next, the headlight 3 will be explained in detail. FIG 3 is a perspective view of the headlight 3. FIG. 4 is an exploded perspective view of the headlight 3. In the following description, the up-and-down direction, the right-and-left direction and the back-and-forth direction respectively mean those directions in a condition that the headlight 3 is mounted to the scooter type vehicle 1. As shown in FIGS. 3 and 4, the headlight 3 includes a clear cover 30, a reflector member 31, an inner cover 32, an LED device 33 and a housing 34.

The clear cover 30 is made of a material with translucency. The clear cover 30 is attached to the housing 34. The housing 34 is disposed behind the clear cover 30. The housing 34 is attached to the front cover 11. The housing 34 includes an opening 34a opened forward. The clear cover 30 is disposed in the opening 34a. The clear cover 30 is covering the opening 34a. The inner cover 32, the reflector member 31 and the LED device 33 are accommodated in the interior of both the clear cover 30 and the housing 34.

The LED device 33 includes a plurality of LED boards 35 and 36 and a plurality of LED chips 37 to 40. Specifically, the LED device 33 includes the first board 35 and the second board 36. The first board 35 has a shape elongated in the right-and-left direction. The second board 36 has a shape elongated in the back-and-forth direction. The LED device 33 includes the first LED chip 37, the second LED chip 38, the third LED chip 39 and the fourth LED chip 40.

The first LED chip 37 and the fourth LED chip 40 are mounted to the first board 35, and are electrically connected to the first board 35. The first LED chip 37 and the fourth LED chip 40 are disposed on the first board 35 and are separated away from each other in the right-and-left direction. The second LED chip 38 and the third LED chip 39 are mounted to the second board 36, and are electrically connected to the second board 36. The second LED chip 38 and the third LED chip 39 are disposed away from each other in the back-and-forth direction. The third LED chip 39 is disposed forward of the second LED chip 38.

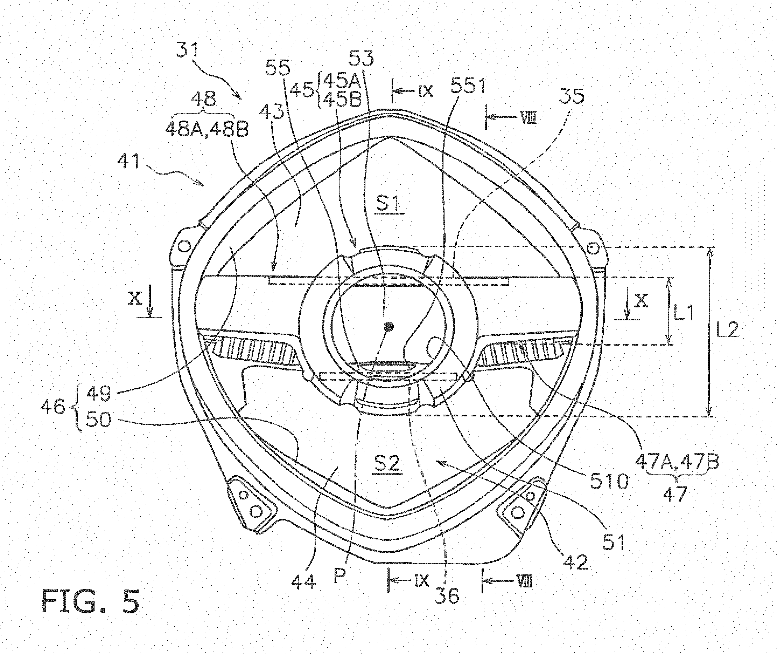

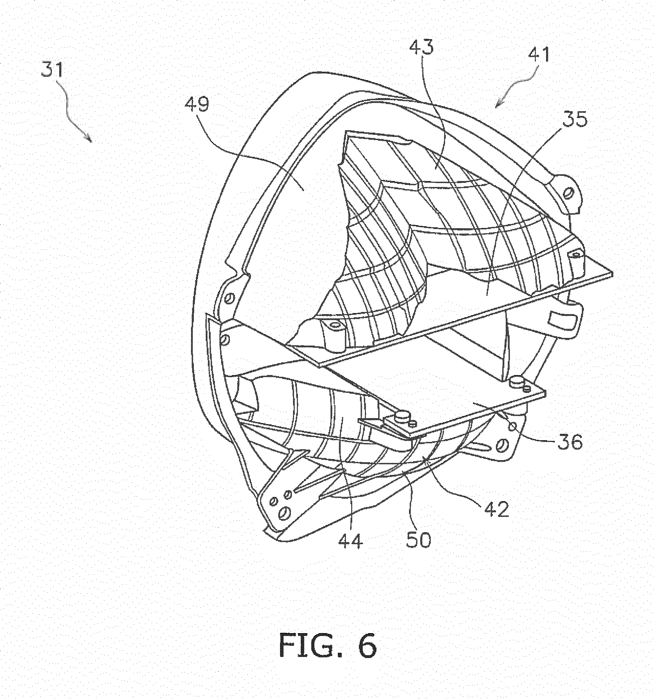

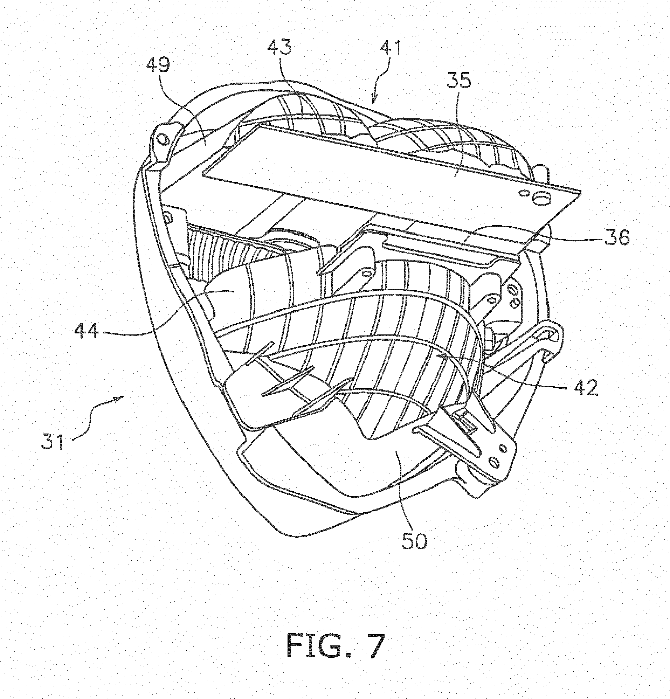

The reflector member 31 includes a first reflector member 41 and a second reflector member 42. FIG 5 is a front view of the reflector member 31. FIG 6 is a perspective view of the reflector member 31 seen from an obliquely upper rear side. FIG 7 is a perspective view of the reflector member 31 seen from an obliquely lower rear side. It should be noted that in FIG 5, the positions of the first board 35 and the second board 36 are depicted with dashed lines. As shown in FIGS. 6 and 7, the first board 35 is attached to the first reflector member 41. The second board 36 is attached to the second reflector member 42.

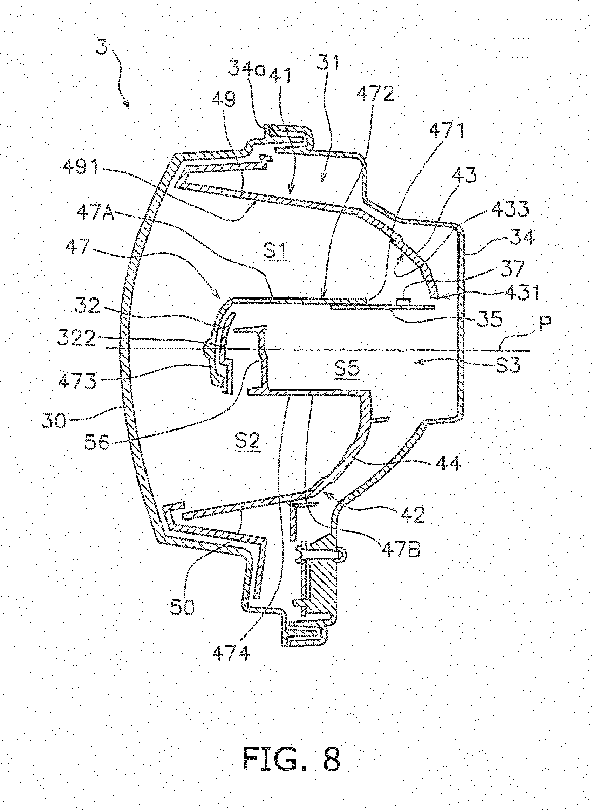

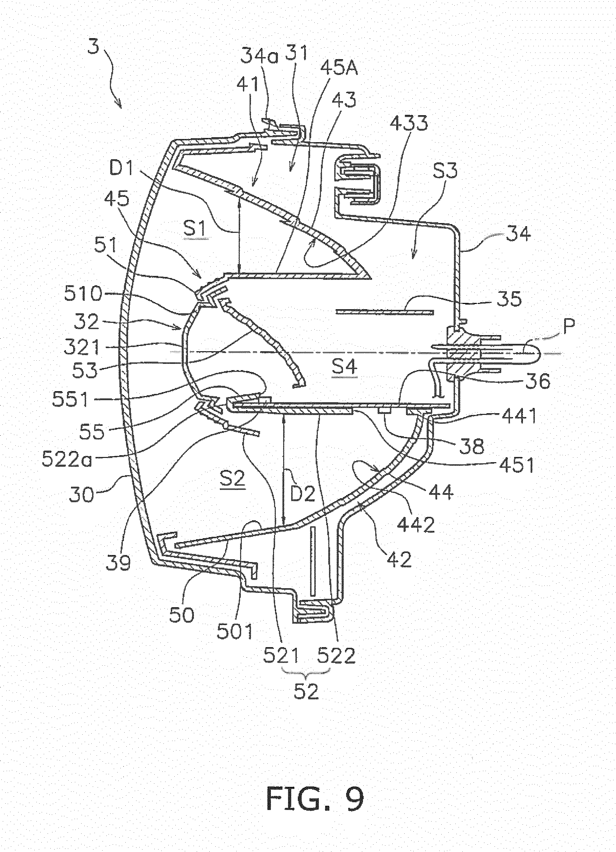

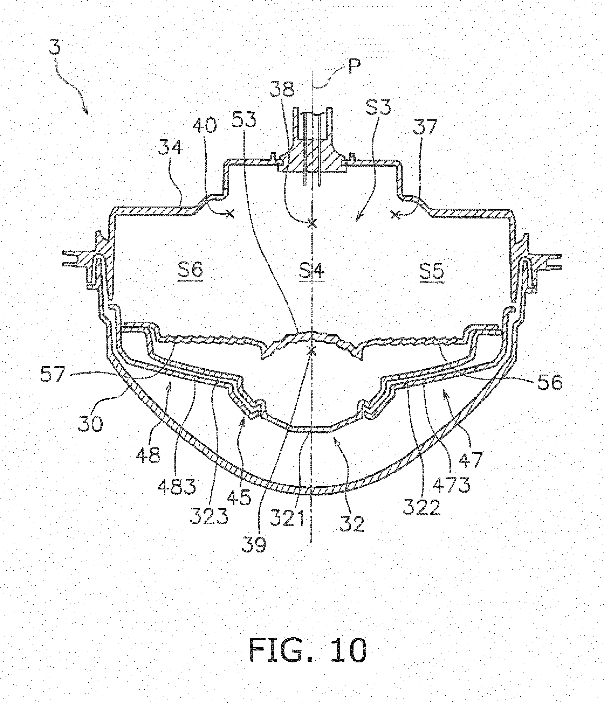

FIG 8 is a cross-sectional view taken along line VIII-VIII in FIG 5. FIG 9 is a cross-sectional view taken along line IX-IX in FIG 5. FIG 10 is a cross-sectional view taken along line X-X in FIG 5. It should be noted that cross-sections of the aforementioned clear cover 30 and housing 34 are also shown in FIGS. 8 to 10.

As shown in FIGS. 5, 8 and 9, the reflector member 31 is accommodated in the housing 34. The reflector member 31 reflects a light irradiated from the first LED chip 37, a light irradiated from the second LED chip 38, and a light irradiated from the fourth LED chip 40. The axis of the reflector member 31, extending in the back-and-forth direction, is depicted with line P in the drawings.

The reflector member 31 includes rear wall portions 43 and 44, a protruding portion 45, a circumferential wall portion 46, and rib portions 47 and 48. The rear wall portions 43 and 44 include a first rear wall portion 43 and a second rear wall portion 44. In a front view, the first rear wall portion 43 is located over the protruding portion 45 and the rib portions 47 and 48. The first rear wall portion 43 has a structure composed of backwardly convex curved shapes aligned right and left. In the front view, the second rear wall portion 44 is located under the protruding portion 45 and the rib portions 47 and 48. The second rear wall portion 44 has a backwardly convex curved shape.

The circumferential wall portion 46 forwardly extends from the rear wall portions 43 and 44. The circumferential wall portion 46 includes a first circumferential wall portion 49 and a second circumferential wall portion 50. The first circumferential wall portion 49 forwardly extends from the first rear wall portion 43. The first circumferential wall portion 49 circumferentially extends about the axis P. In the front view, the first circumferential wall portion 49 is located over the protruding portion 45 and the rib portions 47 and 48.

The second circumferential wall portion 50 forwardly extends from the second rear wall portion 44. The second circumferential wall portion 50 circumferentially extends about the axis P. In the front view, the second circumferential wall portion 50 is located under the protruding portion 45 and the rib portions 47 and 48.

As shown in FIG 9, the protruding portion 45 forwardly protrudes from the first rear wall portion 43 and the second rear wall portion 44 while being disposed radially inward of the circumferential wall portion 46. The protruding portion 45 is disposed radially away from the circumferential wall portion 46 at an interval. The protruding portion 45 has a tubular shape. When described in detail, as shown in FIG. 5, the protruding portion 45 has a cylindrical shape. In other words, a tip 51 of the protruding portion 45 has a roughly circular contour in the front view. The tip 51 of the protruding portion 45 includes an opening 510. The protruding portion 45 overlaps with the first circumferential wall portion 49 in the back-and-forth direction. Put differently, the protruding portion 45 overlaps with the first circumferential wall portion 49 in a plan view. The protruding portion 45 overlaps with the second circumferential wall portion 50 in the back-and-forth direction. Put differently, the protruding portion 45 overlaps with the second circumferential wall portion 50 in the plan view.

The rib portions 47 and 48 extend in the radial directions of the circumferential wall portion 46 and are connected to the protruding portion 45 and the circumferential wall portion 46. The rib portions 47 and 48 includes a left rib portion 47 and a right rib portion 48. The left rib portion 47 extends leftward from the protruding portion 45 in the front view. The right rib portion 48 extends rightward from the protruding portion 45 in the front view. The protruding portion 45 is disposed between the left rib portion 47 and the right rib portion 48.

As shown in FIG 5, the up-and-down directional (width directional) dimension (dimension L1) of the left rib portion 47 is smaller than that (dimension L2) of the protruding portion 45. It should be noted that in FIG 5, the up-and-down directional dimension of a connecting portion of the left rib portion 47 to the protruding portion 45 is indicated as the up-and-down directional dimension L1 of the left rib portion 47. However, the up-and-down directional dimension of another portion of the left rib portion 47 may be set as the dimension L1. For example, the up-and-down directional dimension of the up-and-down directionally smallest portion of the left rib portion 47 may be set as the dimension L1.

The up-and-down directional (width directional) dimension of the right rib portion 48 is equal to the up-and-down directional dimension L1 of the left rib portion 47. Therefore, the up-and-down directional dimension of the right rib portion 48 is smaller than that of the protruding portion 45. The protruding portion 45 and the left and right rib portions 47 and 48 divide a space produced radially inward of the circumferential wall portion 46 into an upper space S1 and a lower space S2. It should be noted that as shown in FIG. 8, the upper space S1 and the lower space S2 communicate with each other through a space that is located forward of the protruding portion 45 and the left and right rib portions 47 and 48 and is located rearward of the clear cover 30.

The aforementioned protruding portion 45, circumferential wall portion 46 and rib portions 47 and 48 are respectively formed by combining the first reflector member 41 and the second reflector member 42. The detailed construction of the first reflector member 41 and that of the second reflector member 42 will be described below.

The inner cover 32 shown in FIG 4 is made of a material with translucency. The inner cover 32 is attached to the tip 51 of the protruding portion 45. As shown in FIG. 4, the inner cover 32 includes a middle cover portion 321, a left extended portion 322 and a right extended portion 323. As shown in FIG. 9, the tip 51 of the protruding portion 45 includes the opening 510. The middle cover portion 321 closes the opening 510 bored in the tip 51 of the protruding portion 45.

The left extended portion 322 extends leftward from the middle cover portion 321. The right extended portion 323 extends rightward from the middle cover portion 321. As shown in FIG. 8, the left extended portion 322 is disposed behind a front surface 473 of the left rib portion 47. The right extended portion 323 is disposed behind a front surface 483 of the right rib portion 48.

As shown in FIGS. 8 and 9, the reflector member 31 includes a board mount space S3 in which LED boards 35 and 36 are disposed. When described in detail, as shown in FIG 10, the board mount space S3 includes a first space S4 and second spaces S5 and S6. The first space S4 is produced in the interior of the protruding portion 45, whereas the second spaces S5 and S6 are produced in the interior of the left and right rib portions 47 and 48. The second spaces S5 and S6 include the second left space S5 and the second right space S6. The second left space S5 is produced in the interior of the left rib portion 47, whereas the second right space S6 is produced in the interior of the right rib portion 48. The second left space S5 and the second right space S6 communicate with the first space S4.

The first board 35 is disposed across the second left space S5, the first space S4 and the second right space S6. As shown in FIG. 8, the first LED chip 37 is attached to the upper surface of the first board 35. Likewise, the fourth LED chip 40 is attached to the upper surface of the first board 35.

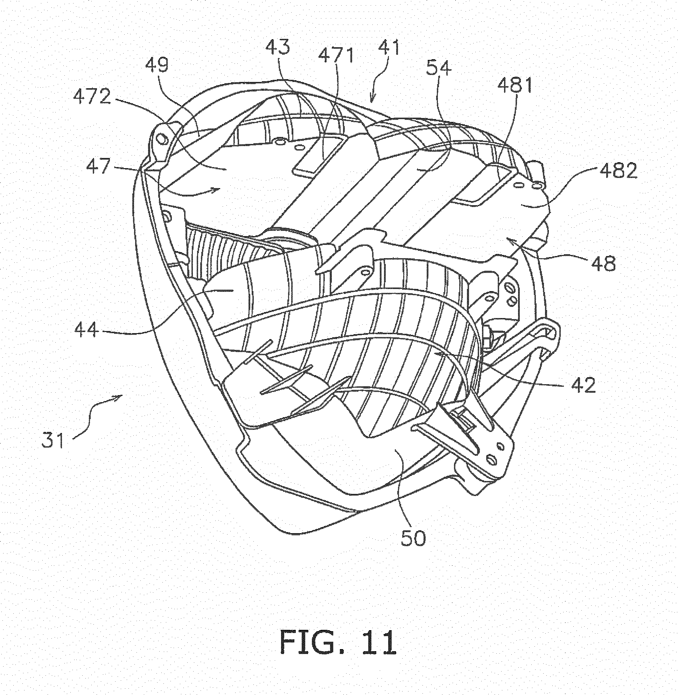

FIG 11 is a perspective view of the reflector member 31 from which the first board 35 and the second board 36 are detached. As shown in FIG. 11, the rib portion 47 and 48 include a left upper opening 471 and a right upper opening 481. The left upper opening 471 and the right upper opening 481 make the board mount space S3 and the upper space S1 communicate with each other. When described in detail, as shown in FIG. 8, the left upper opening 471 is bored in an upper surface 472 of the left rib portion 47. The left upper opening 471 makes the second left space S5 and the upper space S1 communicate with each other. The right upper opening 481 is bored in an upper surface 482 of the right rib portion 48. The right upper opening 481 makes the second right space S6 and the upper space S1 communicate with each other.

The first LED chip 37 is faced to the upper space S1 through the left upper opening 471. The first LED chip 37 is configured to irradiate a light to the upper surface S1 through the left upper opening 471. The fourth LED chip 40 is faced to the upper space S1 through the right upper opening 481. The fourth LED chip 40 is configured to irradiate a light to the upper space S1 through the right upper opening 481.

As shown in FIG. 8, a rear end 431 of the first rear wall portion 43 is disposed rearward of the first LED chip 37. A surface 433 of the first rear wall portion 43 is faced to the upper space S1 and is made in the form of a mirror surface. A surface 491 of the first circumferential wall portion 49 is faced to the upper space S1 and is made in the form of a mirror surface. The first rear wall portion 43 and the first circumferential wall portion 49 forwardly reflect the light irradiated from the first LED chip 37 and the light irradiated from the fourth LED chip 40. The aforementioned clear cover 30 is disposed forward of the first LED chip 37 and the fourth LED chip 40. When the light irradiated from the first LED chip 37 and the light irradiated from the fourth LED chip 40 are reflected by the first rear wall portion 43 and the first circumferential wall portion 49, the clear cover 30 permits the lights to forwardly pass therethrough.

The second board 36 is disposed in the first space S4. As shown in FIG 9, the second LED chip 38 is attached to the lower surface of the second board 36.

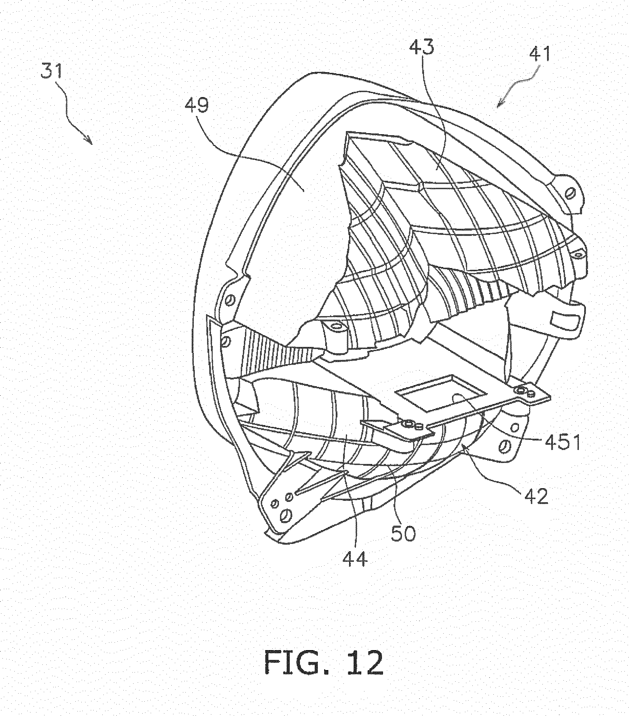

FIG 12 is a perspective view of the reflector member 31 from which the first board 35 and the second board 36 are detached. As shown in FIG 12, the protruding portion 45 includes a lower opening 451. The lower opening 451 makes the board mount space S3 and the lower space S2 communicate with each other. When described in detail, as shown in FIG 9, the lower opening 451 is bored in a bottom surface 52 of the protruding portion 45. The lower opening 451 makes the first space S4 and the lower space S2 communicate with each other.

The second LED chip 38 is faced to the lower space S2 through the lower opening 451. The second LED chip 38 is configured to irradiate a light to the lower space S2 through the lower opening 451. As shown in FIG 9, a rear end 441 of the second rear wall portion 44 is disposed rearward of the second LED chip 38. A surface 442 of the second rear wall portion 44 is faced to the lower space S2 and is made in the form of a mirror surface. A surface 501 of the second circumferential wall portion 50 is faced to the lower space S2 and is made in the form of a mirror surface. The second rear wall portion 44 and the second circumferential wall portion 50 forwardly reflect the light irradiated from the second LED chip 38. The aforementioned clear cover 30 is disposed forward of the second LED chip 38. When the light irradiated from the second LED chip 38 is reflected by the second rear wall portion 44 and the second circumferential wall portion 50, the clear cover 30 permits the light to forwardly pass therethrough.

The third LED chip 39 is attached to the upper surface of the second board 36, and is disposed in the first space S4. A reflector portion 53 is disposed in the first space S4. The reflector portion 53 has a backwardly convex curved shape. The front surface of the reflector portion 53 is made in the form of a mirror surface. The reflector portion 53 forwardly reflects a light irradiated from the third LED chip 39. The aforementioned middle cover portion 321 of the inner cover 32 is disposed in front of the reflector portion 53. When the light irradiated from the third LED chip 39 is reflected by the reflector portion 53, the middle cover portion 321 permits the light to forwardly pass therethrough. When the light irradiated from the third LED chip 39 passes through the middle cover portion 321, the clear cover 30 permits the light to forwardly pass therethrough.

Next, the construction of the first reflector member 41 and that of the second reflector member 42 will be explained in detail. The first reflector member 41 and the second reflector member 42 are provided separately from each other. The second reflector member 42 is attached to the first reflector member 41.

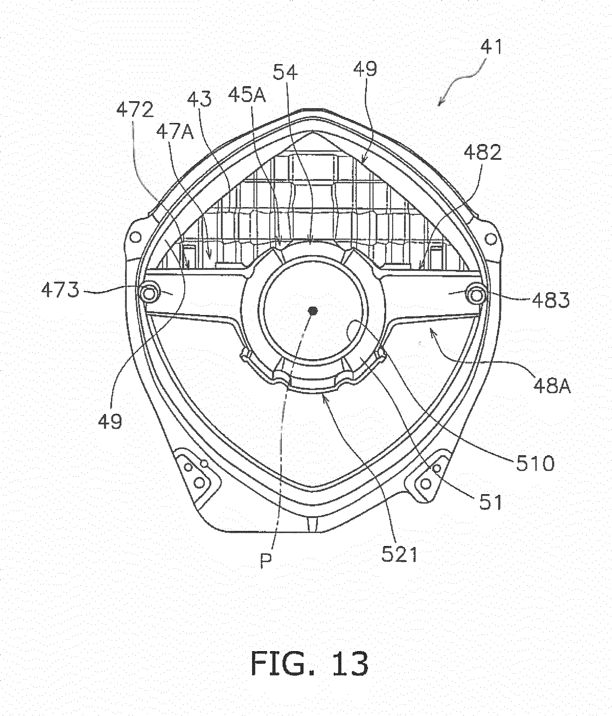

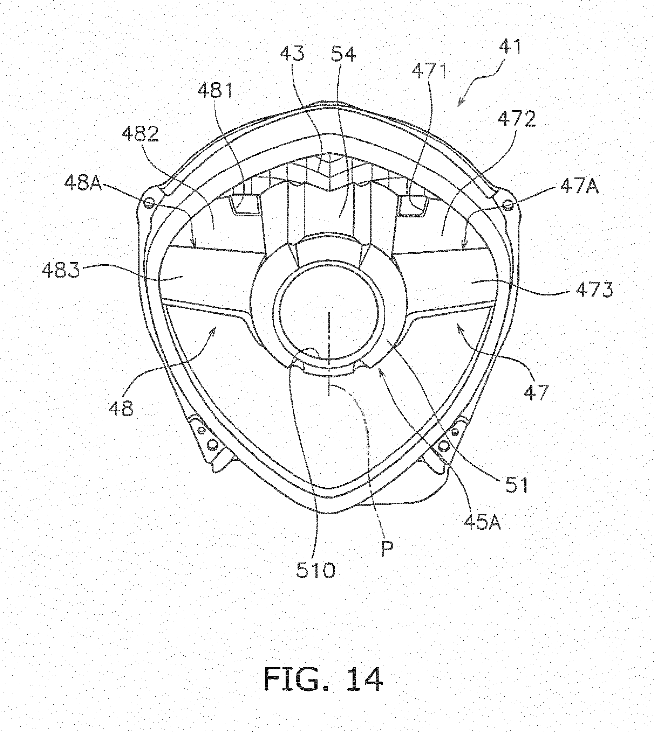

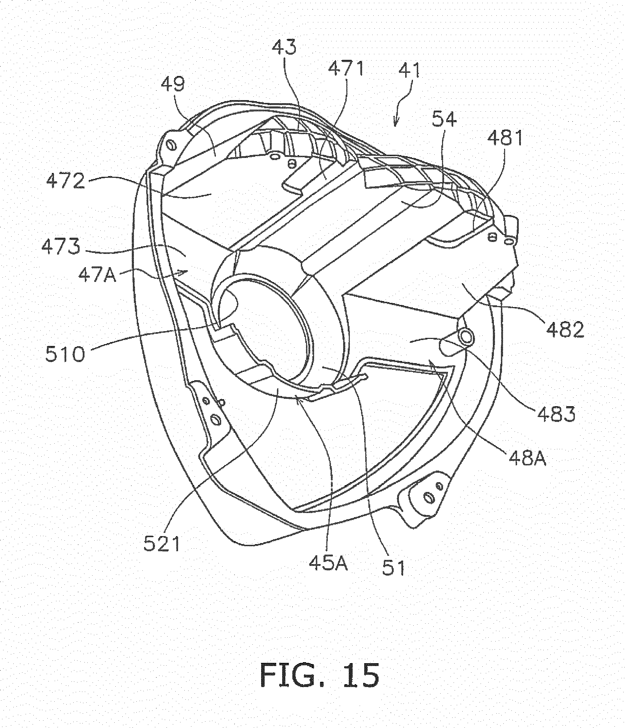

FIG 13 is a rear view of the first reflector member 41. FIG 14 is a perspective view of the first reflector member 41 seen from an obliquely upper front side. FIG. 15 is a perspective view of the first reflector member 41 seen from an obliquely lower rear side. The first reflector member 41 includes the aforementioned first rear wall portion 43, the aforementioned first circumferential wall portion 49, a first left rib portion 47A and a first right rib portion 48A. The first left rib portion 47A includes the upper surface 472 and the front surface 473. The first right rib portion 48A includes the upper surface 482 and the front surface 483. As shown in FIG. 14, the aforementioned left upper opening 471 is bored in the upper surface 472 of the first left rib portion 47A. The aforementioned right upper opening 481 is bored in the upper surface 482 of the first right rib portion 48A. The upper surface 472 of the first left rib portion 47A and the upper surface 482 of the first right rib portion 48A are connected to the first rear wall portion 43.

The first reflector member 41 includes a first protruding portion 45A. The first protruding portion 45A includes the tip 51. The first protruding portion 45A forwardly protrudes from the first rear wall portion 43. The first protruding portion 45A is disposed radially away from the first circumferential wall portion 49 at an interval. The first protruding portion 45A includes an upper surface 54 located higher than the first left and right ribs 47A and 48A of the protruding portion 45. The upper surface 54 is connected to the upper surface 472 of the first left rib portion 47A and the upper surface 482 of the first right rib portion 48A. The upper surface 54 backwardly extends from the tip 51 and is connected to the first rear wall portion 43.

The first protruding portion 45A includes a first bottom surface 521, which is a portion located lower than the left and right rib portions 47 and 48 in the protruding portion 45. The first bottom surface 521 is a portion of the aforementioned bottom surface 52 of the protruding portion 45. The first bottom surface 521 backwardly extends from the lower portion of the tip 51. As shown in FIG. 9, the first bottom surface 521 is not connected to the second rear wall portion 44. Put differently, the first bottom surface 521 is disposed forwardly away from the second rear wall portion 44.

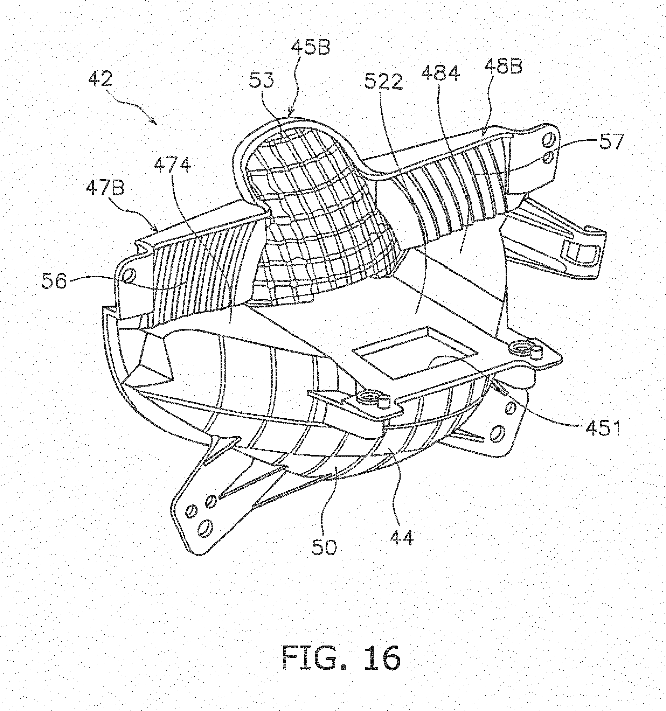

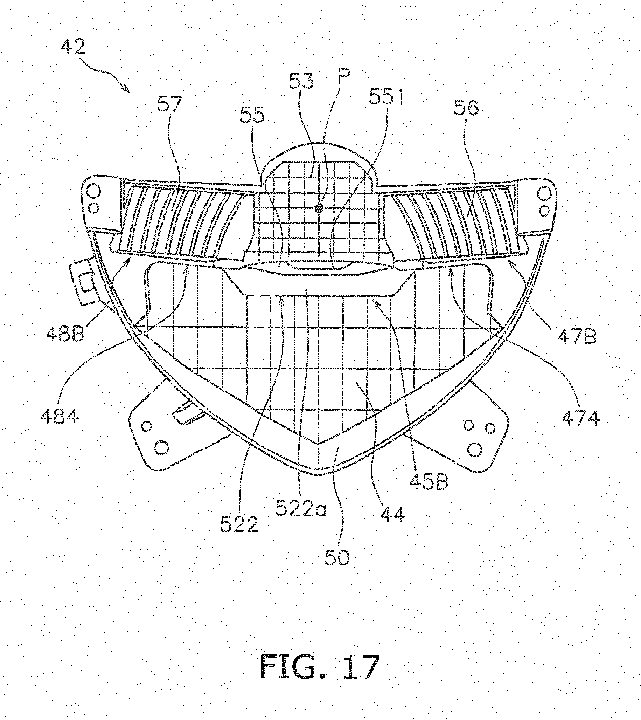

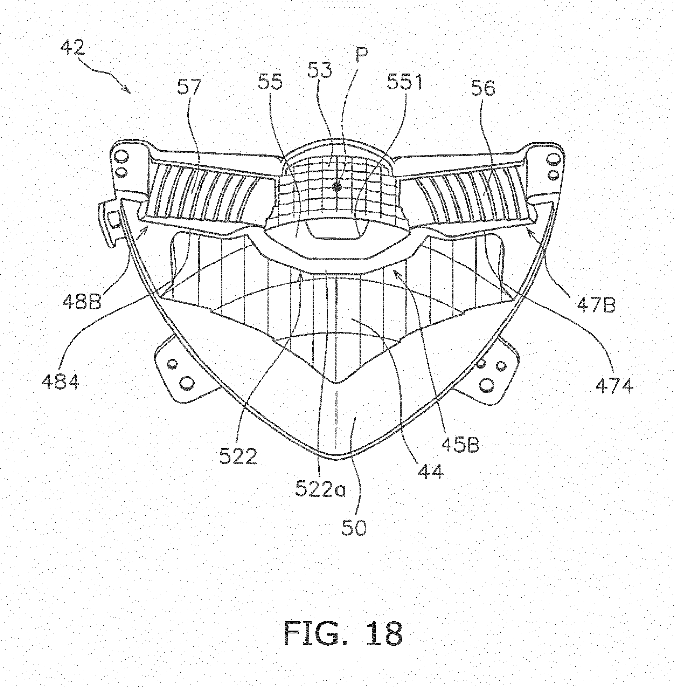

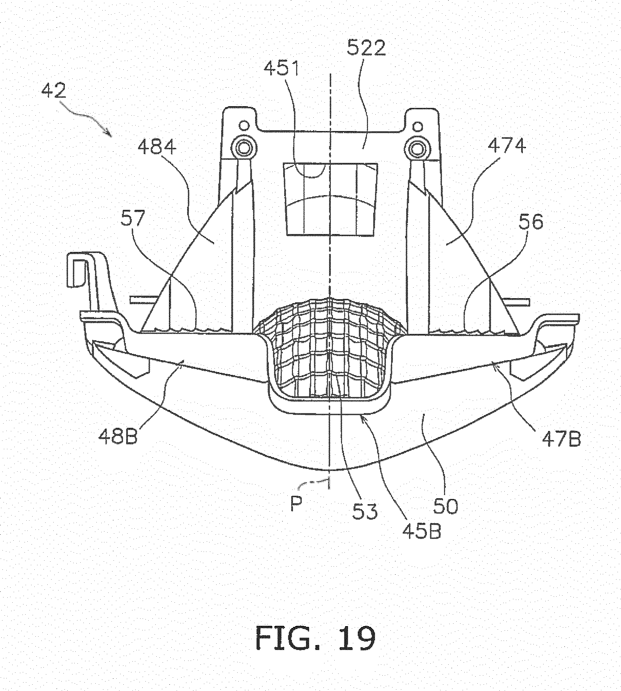

FIG 16 is a perspective view of the second reflector member 42 seen from an obliquely upper rear side. FIG 17 is a front view of the second reflector member 42. FIG 18 is a perspective view of the second reflector member 42 seen from an obliquely upper front side. FIG 19 is a plan view of the second reflector member 42.

The second reflector member 42 includes the aforementioned second rear wall portion 44, a second left rib portion 47B and a second right rib portion 48B. The second reflector member 42 includes a bottom surface 474 of the second left rib portion 47B and a bottom surface 484 of the second right rib portion 48B. The bottom surface 474 of the second left rib portion 47B and the bottom surface 484 of the second right rib portion 48B are connected to the second rear wall portion 44.

The second reflector member 42 includes a second protruding portion 45B forwardly protruding from the second rear wall portion 44. The second protruding portion 45B is disposed radially away from the second circumferential wall portion 50 at an interval. The second protruding portion 45B includes a second bottom surface 522 located lower than the second left and right rib portions 47B and 48B. The second bottom surface 522 is a portion of the aforementioned bottom surface 52 of the protruding portion 45. The second bottom surface 522 is connected to the bottom surface 474 of the second left rib portion 47B and the bottom surface 484 of the second right rib portion 48B. As shown in FIGS. 9 and 16, the aforementioned lower opening 451 is bored in the second bottom surface 522. A front end 522a of the second bottom surface 522 is located over the first bottom surface 521.

The second protruding portion 45B includes the aforementioned reflector portion 53 and a connecting plate portion 55 that connects the reflector portion 53 and the second bottom surface 522. The first protruding portion 45A and the second protruding portion 45B compose the protruding portion 45. The first left rib portion 47A and the second left rib portion 47B compose the left rib portion 47. The first right rib portion 48A and the second right rib portion 48B compose the right rib portion 48. The reflector portion 53 is disposed over the second bottom surface 522. As shown in FIG 9, the reflector portion 53 divides the first space S4 into front and rear regions. The front end 522a of the second bottom surface 522 is located forward of the reflector portion 53.

As shown in FIGS. 9 and 18, the connecting plate portion 55 is disposed between the second bottom surface 522 and the reflector portion 53 in the up-and-down direction. The front end of the connecting plate portion 55 is connected to the front end 522a of the second bottom surface 522, whereas the rear end thereof is connected to the lower end of the reflector portion 53. The connecting plate portion 55 includes an opening 551. The third LED chip 39 is configured to irradiate a light to a region, located forward of the reflector portion 53 in the first space S4, through the opening 551 of the connecting plate portion 55.

As shown in FIG 9, the front end of the second board 36 is disposed between the connecting plate portion 55 and the second bottom surface 522. As shown in FIG. 5, the second board 36 overlaps with the tip 51 of the protruding portion 45 and the connecting plate portion 55 in the front view. Due to the construction, the second board 36 is unlikely to appear on the exterior of the headlight 3 when the headlight 3 is mounted to the vehicle.

As shown in FIG. 9, the first board 35 is disposed behind the reflector portion 53. As shown in FIG 5, the first board 35 overlaps with the left rib portion 47, the tip 51 of the protruding portion 45, the reflector portion 53, and the right rib portion 48 in the front view. Therefore, the first board 35 is unlikely to appear on the exterior of the headlight 3 when the headlight 3 is mounted to the vehicle.

As shown in FIGS. 16 to 18, the second reflector member 42 includes a left front wall portion 56 and a right front wall portion 57. The left front wall portion 56 is disposed leftward of the reflector portion 53. The right front wall portion 57 is disposed rightward of the reflector portion 53. The reflector portion 53 is connected to the left front wall portion 56 and the right front wall portion 57. As shown in FIG. 10, the left front wall portion 56 is located behind the front surface 473 of the left rib portion 47. The right front wall portion 57 is located behind the front surface 483 of the right rib portion 48.

The left front wall portion 56 divides the second left space S5 into front and rear regions. The right front wall portion 57 divides the second right space S6 into front and rear regions. Put differently, the left front wall portion 56, the reflector portion 53, and the right front wall portion 57 divide the board mount space S3 into front and rear regions.

In the headlight 3 according to the present preferred embodiment explained above, even in constructing the protruding portion 45 that forwardly protrudes from the rear wall portions 43 and 44 while being disposed radially inward of the circumferential wall portion 46, the stiffness of supporting the protruding portion 45 can be enhanced with the rib portions 47 and 48 connected to the protruding portion 45 and the circumferential wall portion 46.

Additionally, the board mount space S3 is produced by connecting the first space S4 of the protruding portion 45 and the second left and right spaces S5 and S6 of the rib portions 47 and 48. Hence, it is possible to reliably produce a heat dissipation space having a larger volume than that produced when only the protruding portion 45 is provided without the rib portions. Therefore, it is possible to reduce necessity to increase the cross-sectional area and the length of the protruding portion 45 so as to increase the volume of the heat dissipation space.

On the other hand, the rib portion 47 radially extends and is connected to the protruding portion 45 and the circumferential wall portion 46, whereby the space surrounding the protruding portion 45 is divided into the spaces S1 and S2. Hence, distances D1 and D2 between the protruding portion 45 and the circumferential wall portion 46 can be reliably kept long in most of the space surrounding the protruding portion 45 except for the rib portions 47 and 48. Therefore, it is herein easier to reliably obtain required luminous intensity distribution than a construction that the cross-sectional area of the protruding portion 45 is uniformly enlarged in the radial direction so as to reliably produce a heat dissipation space.

Consequently, it is possible to reliably achieve stiffness required for supporting the protruding portion 45 and luminous intensity distribution required for the headlight, and simultaneously, to enhance efficiency in dissipation of heat from the LED boards 35 and 36.

As described above, each of the protruding portion 45, the circumferential wall portion 46 and the rib portions 47 and 48 is constructed by combination of the first reflector member 41 and the second reflector member 42. Even in focusing only on the first reflector member 41, the first protruding portion 45A is connected to the upper surfaces 472 and 482 and the front surfaces 472 and 483 of the first left and right rib portions 47A and 48A. Hence, the stiffness for supporting the first protruding portion 45A can be enhanced. With the enhancement of the stiffness for supporting the first protruding portion 45A, the first protruding portion 45A can be produced in small size. Additionally, the radial distance D1 between the first circumferential wall portion 49 and the LED chips 37 and 40 can be increased. Hence, required luminous intensity distribution can be reliably achieved.

Likewise, even in focusing only on the second reflector member 42, the second protruding portion 45B is connected to the bottom surfaces 474 and 484 of the second left and right rib portions 47B and 48B. Hence, the stiffness for supporting the second protruding portion 45B can be enhanced. With the enhancement of the stiffness for supporting the second protruding portion 45B, the second protruding portion 45B can be produced in small size. Additionally, a radial distance D2 between the second circumferential wall portion 50 and the LED chip 38 can be increased. Hence, required luminous intensity distribution can be reliably achieved.

Even when each of the protruding portion 45, the circumferential wall portion 46 and the rib portions 47 and 48 is thus constructed by split components, the stiffness for supporting the protruding portion 45 can be enhanced, and simultaneously, required luminous intensity distribution can be reliably achieved.

Moreover, the first space S4 in the protruding portion 45 communicates with the second left space S5 in the left rib portion 47 and the second right space S6 in the right rib portion 48. Hence, the volume of the space for dissipating heat from the LED boards 35 and 36 is increased. Accordingly, efficiency in dissipation of heat can be enhanced.

The protruding portion 45 and the left and right rib portions 47 and 48 divide the space produced between the clear cover 30 and the rear wall portions 43 and 44 into the upper space S1 and the lower space S2. Hence, the luminous intensity distribution of a light from the upper space S1 and that of a light from the lower space S2 can be enhanced. Especially, the protruding portion 45 and the left and right rib portions 47 and 48 divide the space produced between the clear cover 30 and the rear wall portions 43 and 44 not into right and left spaces but into upper and lower spaces. Therefore, required luminous intensity distributions can be easily achieved respectively for high and low beams, the irradiation angles of which are different from each other in the up-and-down direction.

The present LED board is divided into the first board 35 and the second board 36. Therefore, flexibility in layout can be enhanced.

The first LED chip 37 and the fourth LED chip 40 are configured to irradiate lights to die upper space S1 through the upper openings 471 and 481. Therefore, lights can be irradiated to the upper space S1 through the upper openings 471 and 481, while the first board 35 is mounted to the board mount space S3. Additionally, a portion of the first board 35 is exposed through the upper openings 471 and 481. With the construction, local heat from this portion can be dissipated to the upper space S1 through the upper openings 471 and 481. Accordingly, efficiency in dissipation of heat can be enhanced as a whole.

The second LED chip 38 is configured to irradiate a light to the lower space S2 through the lower opening 451. Therefore, the light can be irradiated to the lower space S2 through the lower opening 451, while the second board 36 is mounted to the board mount space S3. Additionally, a portion of the second board 36 is exposed through the lower opening 451. With the construction, local heat from this portion can be dissipated to the lower space S2 through the lower opening 451. Accordingly, efficiency in dissipation of heat can be enhanced as a whole.

The first board 35 is disposed across the first space S4 and the second spaces S5 and S6. Therefore, heat from the first board 35 can be dissipated to the first space S4 and the second spaces S5 and S6. Accordingly, efficiency in dissipation of heat can be further enhanced. Additionally, flexibility in layout is enhanced, and thus, a large board can be accommodated.

An up-and-down directional dimension L1 of the left and right rib portions 47 and 48 is smaller than an up-and-down directional dimension L2 of the protruding portion 45. Therefore, reduction in the upper space S1 and the lower space S2 by the left and right rib portions 47 and 48 can be inhibited. Accordingly, a large irradiation area can be reliably produced.

The third LED chip 39 is disposed in the first space S4. Hence, a light can be irradiated from the protruding portion 45 through the inner cover 32. Accordingly, it is possible to make the third LED chip 39 function as, for instance, a light source of a position light.

The third LED chip 39 is attached to the upper surface of the second board 36, whereas the second LED chip 38 is attached to the lower surface of the second board 36. Therefore, the second board 36 can be used as a common board for the second and third LED chips 38 and 39 by attaching the second and third LED chips 38 and 39 to the lower and upper surfaces of the second board 36 on a one-to-one basis.

The reflector portion 53 is disposed in the first space S4 and forwardly reflects the light from the third LED chip 39. Accordingly, flexibility in layout of the third LED chip 39 can be enhanced. Additionally, the third LED chip 39 is disposed forward of the first LED chip 37, the second LED chip 38 and the fourth LED chip 40. Hence, the construction makes it easy to forwardly irradiate the light from the tip 51 of the protruding portion 45.

One preferred embodiment of the present invention has been described above. However, the present invention is not limited to the aforementioned preferred embodiment, and a variety of changes can be made without departing from the scope of the present invention.

In the aforementioned preferred embodiment, each of the protruding portion 45, the circumferential wall portion 46 and the rib portions 47 and 48 is constructed by the combination of the first reflector member 41 and the second reflector member 42, but alternatively, may be constructed by a single reflector member.

In the aforementioned preferred embodiment, the light irradiated from the first LED chip 37 and that irradiated from the fourth LED chip 40 are reflected by the first rear wall portion 43 and the first circumferential wall portion 49, and are then irradiated obliquely downward from the headlight 3. Put differently, the first LED chip 37 and the fourth LED chip 40 are light sources of low beams.

On the other hand, the light irradiated from the second LED chip 38 is reflected by the second rear wall portion 44 and the second circumferential wall portion 50, and is then irradiated obliquely upward from the headlight 3. Put differently, the second LED chip 38 is a light source of a high beam. The third LED chip 39 is a light source of a position light.

It should be noted that the roles of the first to fourth LED chips 37 to 40 may be changed without being limited to those of the above. For example, the first LED chip 37 may be a light source of a high beam. The second LED chip 38 may be a light source of a low beam. The third LED chip 39 may be either a light source of a high beam or a light source of a low beam. Alternatively, the third LED chip 39 may not be provided. The fourth LED chip 40 may not be provided. The number of the LED chips is not limited to four, and may be either less than four or more than four.

The shapes and positional arrangements of the LED boards are not limited to those of the aforementioned preferred embodiment. For example, an integrated LED board may be provided without being split. Alternatively, an LED board may be split into three or more boards.

The first board 35 may be disposed only in the first space. The second board 36 may be disposed across the first space and the second space.

Alternatively, the up-and-down directional positions of the first board 35 and the second board 36 may be reversed. Put differently, the first board 35 may be disposed in the present position of the second board 36, whereas the second board 36 may be disposed in the present position of the first board 35. At this time, the positions of the first to fourth LED chips 37 to 40 and the angle of the reflector member 31 may be arbitrarily adjusted.

The shape of the protruding portion 45 is not limited to the cylindrical shape. Put differently, the protruding portion 45 is not limited to a tubular member having a circular cross-sectional shape, and may be a tubular member having a cross-sectional shape different from the circular cross-sectional shape. The shape of each rib portion is not limited to a shape extending right and left. For example, each rib portion may have a shape extending up and down from the protruding portion 45.

The third LED chip 39 may be attached to the lower surface of the first board 35. In this construction, the first board 35 can be used as a common board for the first and third LED chips 37 and 39 by attaching the first and third LED chips 37 and 39 to the upper and lower surfaces of the first board 35 on a one-to-one basis.

In the aforementioned preferred embodiment, the upper openings 471 and 481 are respectively bored in the rib portions 47 and 48. However, an upper opening may be bored in the protruding portion so as to make the board mount space and the upper space communicate with each other. Alternatively, upper openings may be bored in the protruding portion and the rib portions so as to make the board mount space and the upper space communicate with each other.

In the aforementioned preferred embodiment, the lower opening 451 is bored in the protruding portion 45. However, lower openings may be bored in the rib portions so as to make the board mount space and the lower space communicate with each other. Alternatively, lower openings may be bored in the protruding portion and the rib portions so as to make the board mount space and the lower space communicate with each other.

The rear wall portions may be disposed not only partially but also entirely rearward of the LED chips. The circumferential wall portion may be disposed so as to overlap with the protruding portion not only partially but also entirely in the back-and-forth direction.

The reflector member 31 may not be split into the first reflector member 41 and the second reflector member 42. The shape of the first reflector member 41 and that of the second reflector member 42 may be changed without being limited to those of the aforementioned preferred embodiment. The inner cover 32 may not be provided.

The aforementioned preferred embodiment has exemplified a case that the headlight of the present invention is applied to the scooter type motorcycle. However, the application target of the headlight of the present invention is not limited to the scooter type motorcycle. The headlight of the present invention may be applied to motorcycles other than the scooter type motorcycle, and may be even applied to a saddle-ride type vehicle other than motorcycles. It should be noted that the saddle-ride type vehicle refers to general vehicles on which a rider rides while straddling a saddle. The saddle-ride type vehicle includes the motorcycle, a three-wheeler, a four-wheel buggy (ATV: All Terrain Vehicle), a personal watercraft, a snowmobile and so forth.

## Claims

1. A headlight (3), comprising:
an LED device (33) including at least one LED chip (37~40) and at least one LED board (35, 36) electrically connected to the at least one LED chip (37-40);
a housing (34) including an opening (34a) opened forward, the housing (34) accommodating the LED device (33);
a reflector member (31) accommodated in the housing (34), the reflector member (31) reflecting a light irradiated from the at least one LED chip (37-40); and
a clear cover (30) covering the opening (34a) of the housing (34), the clear cover (30) permitting the light irradiated from the at least one LED chip (37~40) to forwardly pass therethrough, wherein
the reflector member (31) includes
a rear wall portion (43, 44) at least partially disposed rearward of the at least one LED chip (37-40),
a circumferential wall portion (46) forwardly extending from the rear wall portion (43, 44), the circumferential wall portion (46) extending circumferentially about an axis (P) extending in a back-and-forth direction,
a protruding portion (45) forwardly protruding from the rear wall portion (43, 44) while being disposed radially inward of the circumferential wall portion (46), and
a rib portion (47, 48) extending in a radial direction of the circumferential wall portion (46), the rib portion (47, 48) being connected to the protruding portion (45) and the circumferential wall portion (46),
the reflector member (31) includes a board mount space (S3) in which the at least one LED board (35, 36) is disposed,
the board mount space (S3) includes
a first space (S4) produced inside the protruding portion (45), and
a second space (S5, S6) produced inside the rib portion (47, 48), the second space (S5, S6) communicating with the first space (S4),
the rib portion (47, 48) includes
a left rib portion (47) extending leftward from the protruding portion (45) in a front view, and
a right rib portion (48) extending rightward from the protruding portion (45) in the front view, and
the rib portion (47, 48) and the protruding portion (45) divide a space enclosed by the circumferential wall portion (46) into an upper space (S1) and a lower space (S2) in the front view,
**characterized in that**
in a thickness direction of the rib portion (47, 48), the rib portion (47, 48) has a dimension (L1) smaller than a dimension (L2) of the protruding portion (45).

2. The headlight (3) according to claim 1, wherein the at least one LED chip (37~40) includes
a first LED chip (37) configured to irradiate a light to the upper space (S1), and
a second LED chip (38) configured to irradiate a light to the lower space (S2).

3. The headlight (3) according to claim 2, wherein the at least one LED board (35, 36) includes
a first board (35) electrically connected to the first LED chip (37), and
a second board (36) electrically connected to the second LED chip (38).

4. The headlight (3) according to claim 3, wherein
the protruding portion (45) and/or the rib portion (47, 48) includes an upper opening (471, 481) for making the board mount space (S3) and the upper space (S1) communicate with each other, and
the first LED chip (37) is configured to irradiate the light to the upper space (S1) through the upper opening (471, 481).

5. The headlight (3) according to claim 3 or 4, wherein
the protruding portion (45) and/or the rib portion (47, 48) includes a lower opening (451) for making the board mount space (S3) and the lower space (S2) communicate with each other, and
the second LED chip (38) is configured to irradiate the light to the lower space (S2) through the lower opening (451).

6. The headlight (3) according to any of claims 3 to 5, wherein the first board (35) and/or the second board (36) is disposed across the first space (S4) and the second space (S5, S6).

7. The headlight (3) according to any of claims 1 to 6, wherein the at least one LED chip (37~40) includes a third LED chip (39) disposed in the first space (S4).

8. The headlight (3) according to any of claims 3 to 7, wherein
the at least one LED chip (37~40) further includes a third LED chip (39) disposed in the first space (S4),
the third LED chip (39) is attached to an upper surface of the second board (36), and
the second LED chip (38) is attached to a lower surface of the second board (36).

9. The headlight (3) according to any of claims 3 to 7, wherein
the at least one LED chip (37~40) further includes a third LED chip (39) disposed in the first space (S4),
the third LED chip (39) is attached to a lower surface of the first board (35), and
the first LED chip (37) is attached to an upper surface of the first board (35).

10. The headlight (3) according to any of claims 7 to 9, wherein the reflector member (31) further includes a reflector portion (53), the reflector portion (53) being disposed in the first space (S4), the reflector portion (53) forwardly reflecting a light irradiated from the third LED chip (39).

11. The headlight (3) according to any of claims 1 to 10, wherein the protruding portion (45) has a tubular shape.

12. The headlight (3) according to any of claims 1 to 11, further comprising:
an inner cover (32) made of a material with translucency, the inner cover (32) being attached to a tip of the protruding portion (45).

## Patentansprüche

1. Scheinwerfer (3), der umfasst:
eine LED-Vorrichtung (33), die wenigstens einen LED-Chip (37-40) sowie wenigstens eine LED-Platine (35, 36) einschließt, die elektrisch mit dem wenigstens einen LED-Chip (37-40) verbunden ist;
ein Gehäuse (34), das eine nach vorn geöffnete Öffnung (34a) enthält, wobei das Gehäuse (34) die LED-Vorrichtung (33) aufnimmt;
ein Reflektorelement (31), das in dem Gehäuse (34) aufgenommen ist, wobei das Reflektorelement (31) ein von dem wenigstens einen LED-Chip (37-40) ausgestrahltes Licht reflektiert; sowie
eine durchsichtige Abdeckung (30), die die Öffnung (34a) des Gehäuses (34) abdeckt, wobei die durchsichtige Abdeckung (30) zulässt, dass das von dem wenigstens einen LED-Chip (37-40) ausgestrahlte Licht nach vorne durch sie hindurchtritt, und
das Reflektorelement (31) einschließt:
einen Rückwandabschnitt (43, 44), der wenigstens teilweise hinter dem wenigstens einen LED-Chip (37-40) angeordnet ist,
einen Umfangswandabschnitt (46), der sich von dem Rückwandabschnitt (43, 44) nach vorn erstreckt, wobei der Umfangswandabschnitt (46) in Umfangsrichtung um eine Achse (P) herum verläuft, die sich in einer Längsrichtung erstreckt,
einen vorstehenden Abschnitt (45), der von dem Rückwandabschnitt (43, 44) nach vorn vorsteht und dabei radial innerhalb des Umfangswandabschnitts (46) angeordnet ist, sowie
einen Rippenabschnitt (47, 48), der sich in einer radialen Richtung des Umfangswandabschnitts (46) erstreckt, wobei der Rippenabschnitt (47, 48) mit dem vorstehenden Abschnitt (45) und dem Umfangswandabschnitt (46) verbunden ist,
das Reflektorelement (31) einen Platinen-Montageraum (S3) einschließt, in dem die wenigstens eine LED-Platine (35, 36) angeordnet ist,
der Platinen-Montageraum (S3) einschließt:
einen ersten Raum (S4), der im Inneren des vorstehenden Abschnitts (45) hergestellt wird, sowie
einen zweiten Raum (S5, S6), der im Inneren des Rippenabschnitts (47, 48) hergestellt wird, wobei der zweite Raum (S5, S6) mit dem ersten Raum (S4) in Verbindung steht,
und der Rippenabschnitt (47, 48) enthält:
einen linken Rippenabschnitt (47), der sich von dem vorstehenden Abschnitt (45) in einer Vorderansicht nach links erstreckt, sowie
einen rechten Rippenabschnitt (48), der sich von dem vorstehenden Abschnitt (45) in der Vorderansicht nach rechts erstreckt, und
der Rippenabschnitt (47, 48) und der vorstehende Abschnitt (45) einen Raum, der von dem Umfangswandabschnitt (46) umschlossen wird, in der Vorderansicht in einen oberen Raum (S1) und einen unteren Raum (S2) unterteilen,
**dadurch gekennzeichnet, dass**
der Rippenabschnitt (47, 48) in einer Dickenrichtung des Rippenabschnitts (47, 48) eine Abmessung (L1) hat, die kleiner ist als eine Abmessung (L2) des vorstehenden Abschnitts (45).

2. Scheinwerfer (3) nach Anspruch 1, wobei der wenigstens eine LED-Chip (37-40) enthält:
einen ersten LED-Chip (37), der so ausgeführt ist, dass er ein Licht zu dem oberen Raum (S1) ausstrahlt, sowie
einen zweiten LED-Chip (38), der so ausgeführt ist, dass er ein Licht zu dem unteren Raum (S2) ausstrahlt.

3. Scheinwerfer (3) nach Anspruch 2, wobei die wenigstens eine LED-Platine (35, 36) enthält:
eine erste Platine (35), die elektrisch mit dem ersten LED-Chip (37) verbunden ist, und
eine zweite Platine (36), die elektrisch mit dem zweiten LED-Chip (38) verbunden ist.

4. Scheinwerfer (3) nach Anspruch 3, wobei
der vorstehende Abschnitt (45) und/oder der Rippenabschnitt (47, 48) eine obere Öffnung (471, 481) enthalten/enthält, über die Verbindung zwischen dem Platinen-Montageraum (S3) und dem oberen Raum (S1) hergestellt wird, und
der erste LED-Chip (37) so ausgeführt ist, dass er das Licht durch die obere Öffnung (471, 481) hindurch zu dem oberen Raum (S1) ausstrahlt.

5. Scheinwerfer (3) nach Anspruch 3 oder 4, wobei
der vorstehende Abschnitt (45) und/oder der Rippenabschnitt (47, 48) eine untere Öffnung (451) enthalten/enthält, über die Verbindung zwischen dem Platinen-Montageraum (S3) und dem unteren Raum (S2) hergestellt wird, und
der zweite LED-Chip (38) so ausgeführt ist, dass er das Licht durch die untere Öffnung (451) hindurch zu dem unteren Raum (S2) ausstrahlt.

6. Scheinwerfer (3) nach einem der Ansprüche 3 bis 5, wobei die erste Platine (35) und/oder die zweite Platine (36) quer über den ersten Raum (S4) und den zweiten Raum (S5, S6) angeordnet sind/ist.

7. Scheinwerfer (3) nach einem der Ansprüche 1 bis 6, wobei der wenigstens eine LED-Chip (37-40) einen dritten LED-Chip (39) enthält, der in dem ersten Raum (S4) angeordnet ist.

8. Scheinwerfer (3) nach einem der Ansprüche 3 bis 7, wobei
der wenigstens eine LED-Chip (37-40) des Weiteren einen dritten LED-Chip (39) einschließt, der in dem ersten Raum (S4) angeordnet ist,
der dritte LED-Chip (39) an einer oberen Fläche der zweiten Platine (36) angebracht ist und
der zweite LED-Chip (38) an einer unteren Fläche der zweiten Platine (36) angebracht ist.

9. Scheinwerfer (3) nach einem der Ansprüche 3 bis 7, wobei
der wenigstens eine LED-Chip (37-40) des Weiteren einen dritten LED-Chip (39) einschließt, der in dem ersten Raum (S4) angeordnet ist,
der dritte LED-Chip (39) an einer unteren Fläche der ersten Platine (35) angebracht ist und
der erste LED-Chip (37) an einer oberen Fläche der ersten Platine (35) angebracht ist.

10. Scheinwerfer (3) nach einem der Ansprüche 7 bis 9, wobei das Reflektorelement (31) des Weiteren einen Reflektorabschnitt (53) einschließt, der Reflektorabschnitt in dem ersten Raum (S4) angeordnet ist und der Reflektorabschnitt (53) ein von dem dritten LED-Chip (39) ausgestrahltes Licht nach vorn reflektiert.

11. Scheinwerfer (3) nach einem der Ansprüche 1 bis 10, wobei der vorstehende Abschnitt (45) eine Röhrenform hat.

12. Scheinwerfer (3) nach einem der Ansprüche 1 bis 11, der des Weiteren umfasst:
eine innere Abdeckung (32), die aus einem Material besteht, das Lichtdurchlässigkeit aufweist, wobei die innere Abdeckung (32) an einem vorderen Ende des vorstehenden Abschnitts (45) angebracht ist.

## Revendications

1. Phare (3), comprenant :
un dispositif à DEL (33) comprenant au moins une puce à DEL (37-40) et au moins une carte à DEL (35, 36) connectée électriquement à ladite au moins une puce à DEL (37~40) ;
un boîtier (34) comprenant une ouverture (34a) ouverte vers l'avant, le boîtier (34) logeant le dispositif à DEL (33) ;
un élément réflecteur (31) logé dans le boîtier (34), l'élément réflecteur (31) réfléchissant une lumière irradiée par ladite au moins une puce à DEL (37~40) ; et
un carénage translucide (30) recouvrant l'ouverture (34a) du boîtier (34), le carénage translucide (30) permettant à la lumière irradiée par ladite au moins une puce à DEL (37~40) de le traverser vers l'avant, dans lequel
l'élément réflecteur (31) comprend
une portion de paroi arrière (43, 44) disposée au moins partiellement à l'arrière de ladite au moins une puce à DEL (37-40),
une portion de paroi circonférentielle (46) s'étendant vers l'avant depuis la portion de paroi arrière (43, 44), la portion de paroi circonférentielle (46) s'étendant circonférentiellement autour d'un axe (P) qui s'étend dans une direction avant-arrière,
une portion saillante (45) qui fait saillie vers l'avant depuis la portion de paroi arrière (43, 44) tout en étant disposée radialement vers l'intérieur de la portion de paroi circonférentielle (46), et
une portion de nervure (47, 48) s'étendant dans une direction radiale de la portion de paroi circonférentielle (46), la portion de nervure (47, 48) étant connectée à la portion saillante (45) et à la portion de paroi circonférentielle (46),
l'élément réflecteur (31) comprend un espace de montage de carte (S3) où ladite au moins une carte à DEL (35, 36) est disposée,
l'espace de montage de carte (S3) comprend
un premier espace (S4) réalisé à l'intérieur de la portion saillante (45), et
un deuxième espace (S5, S6) réalisé à l'intérieur de la portion de nervure (47, 48), le deuxième espace (S5, S6) communiquant avec le premier espace (S4),
la portion de nervure (47, 48) comprend
une portion de nervure gauche (47) s'étendant vers la gauche à partir de la portion saillante (45) en vue de face, et
une portion de nervure droite (48) s'étendant vers la droite à partir de la portion saillante (45) en vue de face, et
la portion de nervure (47, 48) et la portion saillante (45) divisent un espace délimité par la portion de paroi circonférentielle (46) en un espace supérieur (S1) et un espace inférieur (S2) en vue de face,
**caractérisé en ce que**
en direction de l'épaisseur de la portion de nervure (47, 48), la portion de nervure (47, 48) a une dimension (L1) inférieure à une dimension (L2) de la portion saillante (45) .

2. Phare (3) selon la revendication 1, dans lequel ladite au moins une puce à DEL (37~40) comprend
une première puce à DEL (37) configurée pour irradier de la lumière vers l'espace supérieur (S1), et
une deuxième puce à DEL (38) configurée pour irradier de la lumière vers l'espace inférieur (S2).

3. Phare (3) selon la revendication 2, dans lequel ladite au moins une carte à DEL (35, 36) comprend
une première carte (35) connectée électriquement à la première puce à DEL (37), et
une deuxième carte (36) connectée électriquement à la deuxième puce à DEL (38).

4. Phare (3) selon la revendication 3, dans lequel
la portion saillante (45) et/ou la portion de nervure (47, 48) comprend une ouverture supérieure (471, 481) pour faire communiquer entre eux l'espace de montage de carte (S3) et l'espace supérieur (S1), et
la première puce à DEL (37) est configurée pour irradier la lumière vers l'espace supérieur (S1) à travers l'ouverture supérieure (471, 481).

5. Phare (3) selon la revendication 3 ou 4, dans lequel
la portion saillante (45) et/ou la portion de nervure (47, 48) comprend une ouverture inférieure (451) pour faire communiquer entre eux l'espace de montage de carte (S3) et l'espace inférieur (S2), et
la deuxième puce à DEL (38) est configurée pour irradier la lumière vers l'espace inférieur (S2) à travers l'ouverture inférieure (451).

6. Phare (3) selon l'une quelconque des revendications 3 à 5, dans lequel la première carte (35) et/ou la deuxième carte (36) sont disposées de manière à traverser le premier espace (S4) et le deuxième espace (S5, S6).

7. Phare (3) selon l'une quelconque des revendications 1 à 6, dans lequel ladite au moins une puce à DEL (37-40) comprend une troisième puce à DEL (39) disposée dans le premier espace (S4).

8. Phare (3) selon l'une quelconque des revendications 3 à 7, dans lequel
ladite au moins une puce à DEL (37-40) comprend en outre une troisième puce à DEL (39) disposée dans le premier espace (S4),
la troisième puce à DEL (39) est attachée à une surface supérieure de la deuxième carte (36), et
la deuxième puce à DEL (38) est attachée à une surface inférieure de la deuxième carte (36).

9. Phare (3) selon l'une quelconque des revendications 3 à 7, dans lequel
ladite au moins une puce à DEL (37-40) comprend en outre une troisième puce à DEL (39) disposée dans le premier espace (S4),
la troisième puce à DEL (39) est attachée à une surface inférieure de la première carte (35), et
la première puce à DEL (37) est attachée à une surface supérieure de la première carte (35).

10. Phare (3) selon l'une quelconque des revendications 7 à 9, dans lequel l'élément réflecteur (31) comprend en outre une portion de réflecteur (53), la portion de réflecteur (53) étant disposée dans le premier espace (S4), la portion de réflecteur (53) réfléchissant vers l'avant une lumière irradiée par la troisième puce à DEL (39).

11. Phare (3) selon l'une quelconque des revendications 1 à 10, dans lequel la portion saillante (45) présente une forme tubulaire.

12. Phare (3) selon l'une quelconque des revendications 1 à 11, comprenant en outre :
un carénage interne (32) constitué d'un matériau translucide, le carénage interne (32) étant attaché à une pointe de la portion saillante (45).
